# FASCICULE DE BREVET EUROPEEN

(11) **EP 1 019 328 B1**
(45) Date de publication et mention de la délivrance du brevet: **13.11.2002**
(21) Numéro de dépôt: 98945370.9
(22) Date de dépôt: 23.09.1998
(51) Int. Cl.: C02F 3/00, C02F 3/12

(54) **PROCEDE DE CONTROLE ET DE GESTION DU STOCK DE BIOMASSE D'INSTALLATIONS BIOLOGIQUES DE TRAITEMENT D'EAUX USEES**
VERFAHREN ZUR KONTROLLE UND STEUERUNG EINES VORRATS VON BIOMASSE AUS EINER BIOLOGISCHEN ABWASSERBEHANDLUNGSANLAGE
METHOD FOR CONTROLLING AND MANAGING THE BIOMASS STORE OF BIOLOGICAL INSTALLATIONS TREATING WASTE WATER

(30) Priorité: 02.10.1997 FR 9712281
(43) Date de publication de la demande: 19.07.2000
(73) Titulaire: Suez Lyonnaise des Eaux, 92753 Nanterre Cedex (FR)
(72) Inventeur: CHATELLIER, Patrice, F-75018 Paris (FR); CAULET, Philippe, F-78870 Bailly (FR)
(74) Mandataire: Armengaud Ainé, Alain
(86) Numéro de dépôt international: FR9802047
(87) Numéro de publication internationale: WO99018034

(56) Documents cités:
- US-A- 3 558 255
- PATENT ABSTRACTS OF JAPAN vol. 017, no. 073 (C-1026), 15 février 1993 & JP 04 277086 A (ASAHI BREWERIES LTD), 2 octobre 1992 cité dans la demande

## Description

L'invention concerne un procédé de contrôle et de gestion de la quantité de biomasse contenue dans une station de traitement biologique par boues activées d'eaux usées, municipales ou industrielles.

En d'autres termes, l'invention a pour objectif un procédé permettant d'établir un « inventaire de la biomasse » contenue dans une telle station, cette information permettant, lorsqu'elle est couplée à la quantité de biomasse extraite de l'installation, de quantifier les flux de pollution (concentration x débit) reçus par la station de traitement. Il est alors possible de maintenir ladite quantité de biomasse à un niveau optimal correspondant au meilleur état de fonctionnement possible de la station d'épuration.

Conséquence des directives européennes, les techniques d'épuration actuellement mises en oeuvre, visent à limiter les rejets, dans le milieu naturel, d'eaux usées non traitées, les stations devant assurer le traitement de toutes les eaux collectées à l'exception des événements pluvieux exceptionnels. Les stations de traitement ont pour caractéristiques communes de mettre en oeuvre une épuration par boues activées comportant un bassin de traitement (par exemple bassin d'aération/couplé à un clarificateur), d'être dimensionnées sur la base de faibles charges DCO-DBO et d'assurer une élimination plus ou moins complète de la pollution azotée.

En outre, une fiabilité accrue des stations est exigée par les directives européennes et elle impose un suivi rigoureux des stations d'épuration et leur maintien dans le meilleur état de fonctionnement possible, avec un maximum de capacité épuratoire disponible. De plus, le rejet dans le milieu naturel d'un effluent de qualité constante est une contrainte additionnelle, surtout dans les cas (fréquents) où la charge polluante et le débit des eaux usées à traiter varient de manière très significative.

On sait que le bassin de traitement d'une station d'épuration contient un mélange homogène « eau + biomasse », appelé liqueur mixte. La concentration en biomasse dans le clarificateur varie dans l'espace et dans le temps. Ceci est dû au phénomène de décantation qui prend place dans le clarificateur. Il s'ensuit une impossibilité d'estimer la quantité de biomasse contenue dans le clarificateur, et par suite d'estimer la quantité totale de biomasse contenue dans l'installation. Par suite, à ce jour, aucun dispositif connu d'exploitation et de conduite des installations de traitement d'eaux ne prend en compte la gestion de cette « réserve » de biomasse disponible, bien que l'ensemble des actions conventionnelles de pilotage des stations se traduise par une conservation de la biomasse, au moins dans le cas où ledit pilotage aboutit à un fonctionnement stable et équilibré desdites stations.

La seule « évaluation » accessible à l'exploitant consiste à effectuer une mesure de la concentration en boues activées, à comparer le résultat de cette mesure à la valeur-guide de dimensionnement du fournisseur de l'installation, puis à régler, par approximations successives, l'extraction manuelle des boues afin de se rapprocher au maximum de cette valeur de consigne. On peut donc dire que l'état de l'art, dans ce domaine de l'invention des boues est particulièrement rudimentaire.

Le problème du contrôle des masses de boues en clarification présente cependant une importance toute particulière. Une masse de boues trop importante dans un clarificateur induit dans un premier temps des conditions d'anoxie, avec un effet immédiat de dénitrification potentielle et donc l'apparition d'écumes en surface dudit clarificateur.

Dans un second temps, les boues entrent dans des conditions d'anaérobie, dont les répercussions sont souvent désastreuses au niveau de la filière eau et du traitement des boues. En effet au niveau du traitement de l'eau, le développement de micro-organismes filamenteux est favorisé, ce qui génère , sur l'ensemble de la station, des problèmes de moussage et de mauvaise décantation des flocs (élévation de l'indice de Mohlman). Le risque d'entraînement des boues dans l'eau clarifiée est alors augmenté en cas d'à-coup hydraulique. Les conditions anaérobies sont de plus totalement incompatibles avec le procédé de déphosphatation biologique et, dans ce cas, le relargage du phosphore au niveau du clarificateur entraîne une non-conformité immédiate des rejets. Ces événements sont ainsi caractéristiques d'un dysfonctionnement majeur sur la filière eau. En parallèle et d'un point de vue économique direct, le traitement des boues n'est pas optimisé lorsque les propriétés de décantation des flocs sont médiocres et ce, quelle que soit la filière de traitement rencontrée. Les temps de fonctionnement des équipements de la filière de traitement des boues sont allongés, les siccités sont réduites et directement, les volumes de boues extraits sont augmentés pour une masse de matière sèche traitée identique.

Une caractéristique commune aux stations biologiques d'épuration est le maintien de l'équilibre dynamique des systèmes, par l'intermédiaire d'une recirculation permanente de la biomasse épuratoire qui est successivement transférée du bassin d'aération vers le clarificateur, pour être ensuite recirculée depuis le clarificateur vers le bassin d'aération. Cette recirculation s'opère à l'aide d'une pompe dont la capacité détermine:
- la quantité de biomasse qui peut être recirculée et,
- indirectement, la masse de biomasse qui peut être maintenue dans l'installation sans risquer une suraccumulation dans le clarificateur.

Dans des conditions d'équilibre du traitement d'épuration, une masse totale de biomasse présente dans une installation donnée autorise un débit maximal admissible dans l'installation au-delà duquel apparaît un phénomène de suraccumulation de biomasse dans le clarificateur.

Ce phénomène a pour conséquence de maintenir pendant une durée prolongée la biomasse dans un milieu non aéré. Il s'ensuit une dégradation de la biomasse due au manque d'oxygène auquel elle est soumise.

Outre le préjudice causé à la biomasse, une suraccumulation de boues biologiques peut se traduire par un rejet de biomasse mélangé à l'eau traitée et donc à des non-conformités au plan de la teneur en matières en suspension des rejets en milieu naturel.

L'adaptation de la masse de boues dans une installation en fonction du débit maximal susceptible d'arriver à un instant est donc essentielle à la préservation du milieu naturel. Cette adaptation nécessite un système de contrôle capable d'évaluer avec une fréquence suffisamment élevée la masse totale de biomasse contenue dans l'installation. C'est là l'un des objectifs de la présente invention.

D'autre part l'expérience montre que la charge massique (définie comme le flux de pollution à traiter rapporté à la quantité de biomasse présente dans l'installation) est un paramètre déterminant pour la qualité de l'eau traitée. Une charge massique trop élevée peut induire une mauvaise qualité de l'eau traitée.

N'ayant aucun moyen de contrôle sur le flux de pollution à traiter l'exploitant d'une station d'épuration doit cependant pouvoir modifier la charge massique de son installation et le seul paramètre adaptable est la variation de la quantité de biomasse présente dans ladite installation. La connaissance de la masse totale de biomasse présente dans l'installation est donc une information déterminante dans la conduite du procédé biologique d'épuration.

Le respect des nouvelles normes européennes sur les milieux sensibles impose de concevoir des installations qui ne dépassent jamais leur charge nominale. Cette contrainte a pour conséquence des fonctionnements fréquents de l'installation à des charges hydrauliques sensiblement inférieures au nominal. Ceci est notamment le cas au cours des nuits. Pendant ces périodes le débit entrant dans l'installation est faible alors que le débit recirculé depuis le clarificateur vers le bassin d'aération, même s'il diminue, doit rester au moins égal à une valeur imposée par des pompes de recirculation et d'hydraulique du clarificateur. Il s'ensuit un transfert de la masse de boues depuis le clarificateur vers le bassin d'aération, la masse de la biomasse contenue dans le clarificateur devenant négligeable par rapport à la masse contenue dans le bassin d'aération.

L'étude de l'évolution de la concentration en biomasse dans le bassin d'aération permet de visualiser ce phénomène. Cette grandeur passe en effet périodiquement par des maxima relatifs correspondant aux périodes de sous-régime hydraulique. La valeur de la concentration obtenue lors de ces maxima donne, par multiplication par le volume de bassin d'aération, une estimation de la masse totale de biomasse contenue dans la station d'épuration.

US-A-3 558 255 concerne un système de contrôle d'une installation de traitements d'effluents comportant une mesure de la concentration en matières en suspension. Selon ce système, on équilibre les concentrations en boues dans un réacteur biologique associé à un clarificateur, en mesurant la concentration en matières en suspension dans le bassin d'aération puis en transférant par voie de recirculation, les quantités de boues jugées nécessaires notamment pour faire face à un pic de pollution.

JP-A-04 277 086 concerne un procédé de contrôle automatique de la boue recyclée dans une installation de traitement par boues activées. Les boues sont recyclées vers deux types de bassins biologiques, l'un fonctionnant en bactéries aérobies, l'autre en bactéries anaérobies facultatives. On ajuste l'amplitude de la recirculation des boues à partir d'une mesure de la concentration des matières en suspension dans les bassins d'aération.

Aucune des deux publications mentionnées ci-dessus ne fait état de l'ajustement du taux de purge des boues biologiques. Dans ces deux publications, le problème résolu est celui de la recirculation des boues alors que dans la présente demande, le problème à résoudre est celui de la gestion de la quantité de biomasse contenue dans l'installation de traitement.

La présente invention concerne un procédé de contrôle du stock de biomasse permettant d'effectuer une gestion de la quantité de biomasse contenue dans l'installation de traitement, ce procédé étant caractérisé par l'utilisation des variations du régime hydraulique imposées par les variations du débit d'eau à traiter pour évaluer la quantité totale de boues présentes dans l'installation de traitement biologique, cette évaluation, effectuée par une mesure de la quantité de matières en suspension dans le bassin d'aération de l'installation, étant réalisée pendant les périodes de sous-régime hydraulique auxquelles correspondent les maxima de concentration en biomasse dans ledit bassin, la valeur de ladite concentration donnant, une fois multipliée par le volume dudit bassin, une estimation de la masse totale de biomasse contenue dans l'installation d'épuration.

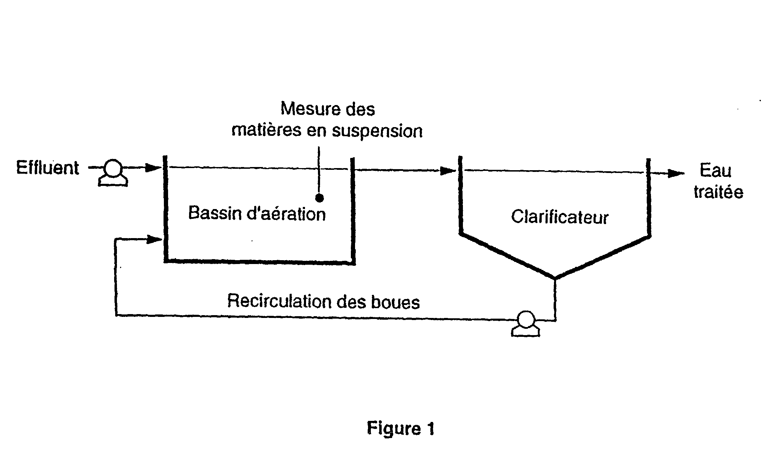

La figure unique du dessin annexé schématise l'installation dans laquelle le procédé de l'invention est mis en oeuvre.

Le principe de la conservation de la matière indique que l'évolution de la masse de biomasse contenue dans l'installation est égale à la quantité de biomasse générale dans ladite installation diminuée de la quantité de biomasse extraite par l'exploitant et de la quantité de biomasse accidentellement rejetée dans le milieu naturel. Dans la mesure où aucun rejet accidentel n'est constaté (par exemple par une mesure de turbidité de l'effluent traité) et où l'exploitant connaît la quantité de biomasse qu'il a extrait (mesure de concentration et de débits d'extraction), il est possible de déduire de l'évolution du stock de biomasse la quantité de biomasse produite par le système. On peut alors estimer, à partir de cette grandeur, la quantité de pollution reçue par l'installation.

Comme on l'a précisé ci-dessus, le procédé objet de l'invention permet d'estimer la masse totale de biomasse contenue dans la station d'épuration et la quantité de pollution reçue par cette dernière. A partir de cette valeur, le procédé permet également de choisir le débit d'extraction de la biomasse de façon à ajuster la masse totale de biomasse en fonction de la quantité de pollution reçue, le rapport de ces deux grandeurs devant être maintenu constant pour obtenir une qualité de traitement stable. D'autre part, le débit d'extraction de biomasse doit être géré de façon telle que le stock de biomasse ne dépasse pas une valeur maximale au-delà de laquelle le risque de rejet accidentel de biomasse mélangée à l'effluent traité devient trop important.

En choisissant de façon appropriée le débit d'extraction de la biomasse, on peut obtenir une qualité de traitement stable et qui limite les risques de rejets accidentels de biomasse dans le milieu naturel.

On notera que la technique de contrôle mise en oeuvre par le procédé de l'invention ne nécessite qu'une sonde à matières en suspension pour déduire la quantité totale de biomasse présente dans l'installation de traitement. II en découle que cette information essentielle peut être obtenue à moindre coût et avec une périodicité suffisante pour une bonne gestion de l'installation.

Il demeure bien entendu que la présente invention n'est pas limitée aux exemples de réalisation décrits et/ou représentés mais qu'elle en englobe toutes les variantes qui entrent dans le cadre de la portée des revendications annexées

## Revendications

1. Procédé de contrôle et de gestion du stock de biomasse d'installations de traitement biologique par boues activées d'eaux usées, municipales ou industrielles qui comportent un bassin d'aération recevant l'effluent à traiter et un bassin de clarification, **caractérisé en ce que**
- on mesure la concentration de matières en suspension dans le bassin d'aération,
- on étudie l'évolution de ladite concentration,
- on détermine les maxima de cette concentration correspondant aux périodes de sous-régime hydraulique,
- on estime la masse totale de biomasse contenue dans l'installation de traitement par multiplication desdits maxima par le volume du bassin d'aération, et
- on règle le débit d'extraction de la biomasse de l'installation de façon à ajuster la masse totale de la biomasse contenue dans l'installation en fonction de la pollution à traiter par l'installation.

2. Procédé selon la revendication 1 **caractérisé en ce qu'**on détermine la quantité de biomasse produite par l'installation, donnant une estimation de la quantité de pollution reçue par ladite installation, à partir de l'évolution de la masse de biomasse contenue dans ladite installation, cette dernière étant égale à la quantité de biomasse générée dans l'installation diminuée de la quantité de biomasse extraite par l'exploitant.

3. Procédé selon la revendication 1 **caractérisé en ce que** l'on maintient constant le rapport entre la masse totale de la biomasse contenue dans l'installation et le débit d'extraction de la biomasse de l'installation.

4. Procédé selon l'une des revendications 1 ou 3 **caractérisé en ce que** le débit d'extraction de la biomasse est géré de manière que le stock de biomasse ne dépasse pas une valeur maximale au-delà de laquelle le risque de rejet accidentel de biomasse mélangée à l'effluent traité devient trop important.

## Patentansprüche

1. Verfahren zur Kontrolle und Führung des Vorrats an Biomasse in Anlagen zur biologischen Behandlung kommunaler oder gewerblicher Abwässer durch Belebtschlamm, die ein das zu behandelnde Abwasser aufnehmendes Belüftungsbecken und ein Klärbecken enthalten, **dadurch gekennzeichnet, dass** die
- Konzentration der im Belüftungsbecken suspendierten Stoffe gemessen und
- Veränderung dieser Konzentration verfolgt wird und
- Maxima dieser Konzentration, die Zeiträumen einer hydraulischen Unterversorgung entsprechen, bestimmt werden und
- Gesamtmasse der in der Behandlungsanlage enthaltenen Biomasse durch Multiplikation der Maxima mit dem Volumen des Belüftungsbeckens ermittelt und
- der aus der Anlage abgezogene Biomasse-Durchsatz so geregelt wird, dass die Gesamtmasse der in der Anlage enthaltenen Biomasse in Abhängigkeit von den in ihr zu behandelnden Schadstoffen eingestellt wird.

2. Verfahren nach Anspruch 1, **dadurch gekennzeichnet, dass** die Menge der von der Anlage erzeugten Biomasse, welche eine Abschätzung der Schadstoffmenge liefert, die von der Anlage aufgenommen wird, aus der Veränderung der Masse der in der Anlage enthaltenen Biomasse bestimmt wird, die gleich der Menge an in der Anlage gebildeter Biomasse minus der vom Betreiber abgezogenen Biomassenmenge ist.

3. Verfahren nach Anspruch 1, **dadurch gekennzeichnet, dass** das *Verhältnis* von Gesamtmasse der in der Anlage enthaltenen Biomasse zum aus der Anlage abgezogenen Durchsatz an Biomasse konstantgehalten wird.

4. Verfahren nach Anspruch 1 oder 3, **dadurch gekennzeichnet, dass** der abgezogene Durchsatz an Biomasse derart geführt wird, dass der Vorrat an Biomasse einen Maximalwert nicht übersteigt, oberhalb dessen die Gefahr einer unbeabsichtigten Abgabe von mit dem behandelten Abwasser vermischter Biomasse zu groß wird.

## Claims

1. Method for controlling and managing the biomass stock of installations for the biological treatment of activated sludge of urban or industrial waste water comprising an aeration tank receiving the effluent to be treated and a clarification tank, **characterized in that**:
- the concentration of material suspended in the aeration tank is measured,
- the evolution of said concentration is studied,
- the maxima of said concentration corresponding to the hydraulic subregime periods is determined,
- the total mass of the biomass contained in the treatment installation is estimated by multiplying said maxima by the volume of the aeration tank and
- the extraction flow rate of the biomass from the installation is regulated so as to adjust the total mass of the biomass contained in the installation as a function of the pollution to be treated by the installation.

2. Method according to claim 1, **characterized in that** the biomass quantity produced by the installation is determined and gives an estimate of the pollution quantity received by said installation, on the basis of the evolution of the biomass mass contained in said installation and which is equal to the biomass quantity generated in the installation, less the biomass quantity extracted by the operator.

3. Method according to claim 1, **characterized in that** the ratio between the total mass of the biomass contained in the installation and the extraction flow of the biomass of the installation is kept constant.

4. Method according to one of the claims 1 or 3, **characterized in that** the biomass extraction flow is managed in such a way that the biomass stock does not exceed a maximum value beyond which the risk of an accidental discharge of biomass mixed with treated effluent becomes excessive.
